# EUROPEAN PATENT APPLICATION

(11) **EP 2 363 723 A1**
(43) Date of publication of application: **07.09.2011**
(21) Application number: 11001809.0
(22) Date of filing: 04.03.2011
(51) Int. Cl.: G01S 1/68, G01S 19/11, G01S 19/48

(54) **Indoor localization system, method and apparatus**

(30) Priority: 04.03.2010 IT MI20100348
(71) Applicant: Nextant S.p.A., 00155 Roma (RM) (IT)
(72) Inventor: Gargiulo, Gianluca, 04024 Gaeta (LT) (IT)
(74) Representative: Di Bernardo, Antonio

(57) **Abstract**

An indoor localization method is disclosed, wherein a fixed emulating system (2) broadcasts at least one GNSS-like signal emulating a GNSS signal transmitted by a satellite. The GNSS-like signal carrying an identifier of said satellite. The method provides for receiving the GNSS-like signal and for determining a position of the receiver by comparing said identifier with a plurality of identifiers associated to different indoor areas (101).

## Description

### [FIELD OF THE INVENTION]

The present invention relates to improvements in positioning systems, such as Global Positioning System (GPS), and in particular to an indoor or subterranean location positioning system.

### [BACKGROUND ART]

Positioning systems are known which allow a receiver to calculate its position based on signals transmitted by a plurality of transmitters.

Global Navigation Satellite Systems (GNSS) are composed by a set of satellites orbiting the Earth and transmitting signals down toward the Earth in the form of radio waves. By knowing the position of at least three satellites and the distance from them, the receiver is able to determine (via a process known as "trilateration") its position. The position of the satellites is known to the receiver since each satellite transmits data (called "ephemeris" and "almanac") which disclose the three dimensional coordinates of the satellite. The distance between satellite and receiver is calculated by multiplying for the speed of light the transit time of the signals received. Since the transit time is calculated as difference between the time at which the signal was transmitted and the time at which the signal has been received, in order to allow accurate position calculation, each satellite is provided with one or more atomic clocks.

Currently, the market offers a variety of portable GPS receivers, also embedded into mobile terminals, such as mobile phones, laptop computers, Palm®, and so on. Such mobile terminals can also host maps data and application that provide localization on a map and guidance to the user.

A conventional GNSS receiver equipment is typically designed to receive GNSS signals in open spaces since the GNSS signals are weak microwave line-of-sight signals that can be attenuated by metal and other materials. Obstacles such as building roofs and walls can prevent the receiver from receiving a sufficient number of GNSS signals for calculating its position.

Nevertheless, there are several situations wherein it is desirable to have a position information also in indoor environments, e.g. because it is desirable to calculate a route and it is necessary to know the starting position, or because it is desirable to receive position related information like products on sale in the neighbourhood of the user.

In order to solve this problem, patent application US2006/0208946A1 discloses an indoor GPS system using one or more GPS repeater units, to repeat GNNS signals received from satellites in an indoor environment. Each of these repeater units comprises an outdoor antenna for receiving satellite signals from a preselected area of the sky, an amplifier and an indoor antenna for repeating the signals in the indoor environment. This solution has several drawbacks. First of all, the system is based on the assumption that the amplifier and the cables introduce a constant delay within each repeating unit; in order for the system to work, this delay shall be the same for all the repeating units. Since not all the cables and amplifiers are exactly the same and introduce exactly the same delay, operation of the system is critical. Furthermore, for the system to work properly, the indoor antenna should be placed exactly under the outdoor antenna, but this is not always possible or easy to make. Alternatively the relative position of the indoor and outdoor antennas should be known in order to recalculate the signals to be transmitted indoor, which is also difficult. Finally, installation costs can be high due to the internal wirings between the roof antennas and every single 'room' in which the service is to be provided.

In a different way, US Patent 5,959,575 discloses a method for indoor navigation using a plurality of ground transceiver in proximity of an indoor area to generate pseudo-satellites signals. These pseudo-satellite signals are generated to include positional coordinates of the ground transceivers. The GPS receiver makes use of these pseudo-satellite signals to calculate its position. This solution has the drawback that it requires the GPS receiver to be provided with a dedicated receiving circuit suitable for receiving the pseudo-satellite signals. Additionally this system makes use of a transceiver unit converting the satellite signals into pseudo-satellite signals, which is more expensive than using simple repeaters.

All these solutions make use of units receiving the satellites signals and retransmitting them, either with the same frequency and/or modulation, or with a different frequency and/or modulation.

US Patent 6,201,497 discloses a position and navigation system for indoor use, which is based on a different philosophy and does not require outdoor antennas for receiving GNSS satellites signals. Instead of using repeaters, this solution makes use of a satellite signal generator that generates a plurality of position signals to be separately broadcast from an array of antennas located at fixed known locations within a building. This solution requires an accurate evaluation of the signal time delays in the transmission paths from the satellite signal generator to each one of the antennas; moreover the location of each antenna has to be exactly known to determine receiver's coordinates by appropriate triangulation. This solution has therefore the disadvantage of requiring hard to perform calibrations in order to work properly.

WO2008097651A1 aims at using the GPS infrastructure to provide information to GPS receivers, like mobile terminals. To this purpose, WO2008097651A1 discloses a system for transmitting non-GPS information for reception by a global positioning system (GPS) receiver. A transmitter transmits GPS-like signals and provides information to the receiver by modulating the signal with an available PRN code. The transmitted information can include non-GPS information which does not include information that is not intended to be used by the GPS for determining the position of the GPS receiver and can be used by the GPS receiver for related or unrelated purposes.

### [OBJECTS AND SUMMARY OF THE INVENTION]

It is an object of the present invention to provide an alternative solution to the known positioning system.

It is also an object of the present invention to overcome the drawbacks of the above described positioning system.

In particular, it is an object of the present invention to provide a localization system for GNSS receiver that is less expensive compared to the known solutions.

It is a further object of the present invention to provide a localization system for GPS receiver that can be easily installed in indoor locations.

Said objects are achieved through an emulating system for use in a localization system and a localization method having the features set out in the appended claims, which are intended as an integral part of the present description.

An idea of the present invention is to provide a ground based localization system wherein localization is obtained comparing at least a GNSS satellite identifier with a list of identifiers associated to different areas.

The indoor localization system comprises a generation unit generating a GNSS-like signal emulating a GNSS signal transmitted by a satellite and therefore comprising a satellite identifier, in particular a unique code (associated to a specific "emulated" satellite ID number) acting as signal signature. This GNSS-like signal is broadcast by means of an antenna and received by a receiver that generates localization information (in particular determines its position) by comparing the satellite identifier of the GNSS-like signal with a list of identifiers associated to different areas.

In this way, when a GNSS receiver is within an area not covered by satellite signals (e.g. inside a building), it can assess its position thanks to the GNSS-like signal and the capacity of the receiver to associate an indoor area to the satellite identifier, and in particular to the satellite ID number of the received GNSS-like signal.

This system provides a limited resolution for positioning since movement of the receiver within the coverage area of the antenna is not detected. Nevertheless, generation of the GNSS-like signals can be easily obtained with a simplified electronic thus reducing the associated costs. In particular there's no need for synchronization of several apparatuses or to provide different separate apparatuses with costly atomic clocks.

Advantageously, the GNSS emulating system comprising the signal generation unit and the antenna, is provided with an interface allowing to set-up coding of the GNSS-like signals, so that different emulating systems can be provided which broadcast signals that can be independently decoded by the receiver because of the different codes (associated to the satellite ID numbers) of the received signals.

The list of satellite identifiers and the information for associating these identifiers to different indoor areas, can be provided to the receiver in different ways.

In a preferred solution, this information is provided to the receiver via a message transmitted along with the GNSS-like signal in particular the GPS Navigation Message. In alternative embodiments, information for associating an identifier to an indoor area is retrieved from sources external to the localization system, like a computer or a network like the Internet.

Since localization is determined differently depending on the fact that a receiver is in open view of satellites or is prevented from receiving satellites signals, the invention provides for several alternative solutions for switching the receiver between an indoor and an outdoor localization method.

In one embodiment switching depends on the satellite identifiers associated to the received signals: a specific set of satellite identifiers is used for satellite the emulation systems. Therefore receiver switches on indoor or outdoor localization method depending on the satellite IDs (emulated or real satellite respectively) of the received signals.

In an other embodiment, receiver normally uses the outdoor localization method and switches to the indoor localization method each time it does not receive a sufficient number of GNSS signals for calculating its position according to standard trilateration method. In this embodiment, preferably each emulating system of the indoor localization system broadcast only one or two GNSS-like signals with corresponding satellite identifiers, so that receiver in indoor mode does not receives a number of signals (with the same power level) sufficient for the receiver to switch to the outdoor mode.

In a second embodiment, the receiver always compares the received satellite identifier with stored identifiers. If the comparison gives a positive match, the receiver switch on the indoor localization method and provides localization information based on the received satellite identifier.

In a different embodiment, the receiver is provided with a software that can assess the receiver position on a map that is provided with information on areas covered by indoor localization systems. Only when the receiver is in proximity of and it is heading toward an area that is known to be covered by indoor localization systems, it starts comparing the satellite identifier of the received GNSS signals in order to compare it with stored satellite identifiers. If the comparison gives a positive match, the receiver switch on the indoor localization method and provides localization information based on the received identifier.

In a further embodiment which reduces the computational efforts of the receiver, the receiver receives a message transmitted along with the GNSS-like signals, which indicates the receiver that the indoor localization method shall be used. In absence of this message the receiver switches in the outdoor localization method and calculates its position by trilateration of GNSS signals.

Advantageously each emulating system generates a plurality of GNSS-like signals having different satellite identifiers. This solution turns into a bigger availability of area identifiers, i.e. instead of mapping one satellite identifier to one area, association can be done between a group of multiple satellite identifiers and one area thus increasing the mapping capability of the system. This solution also provides advantages at the receiver side. The use of combination of codes allows a reduction of the overall number of codes that have to be generated for identifying all the emulated satellites of the indoor localization system, thus reducing the computational effort at the receiver side.

Since different emulating systems can broadcast a different number of GNSS-like signals (e.g. because of different manufacturers or operators), the invention provides for several method for allowing the receiver to understand how many satellite identifiers to consider. In one preferred embodiment, receiver selects all the signals received with the same power, extracts the respective satellite identifiers and compares the group of extracted identifiers with information stored in the receiver. Since all the signals broadcast by the same emulating system are received with the same power, this allows an automatic selection of the correct number of identifiers.

Further objects and advantages of the present invention will be clear from the following detailed description of the invention.

### [BRIEF DESCRIPTION OF THE DRAWINGS]

The invention will be presented here below with reference to non limiting examples, provided for explicative and non limitative reasons in the annexed drawings. These drawings illustrate different aspects and embodiments of the present invention and, where appropriate, reference numerals illustrating like structures, components, materials and/or elements in different figures are indicated by similar reference numbers.
- Figure 1 is a schematic representation of a first embodiment of the invention;
- Figure 2 is an example of PRN code associated to a GNSS signal.
- Figure 3 is a schematic representation of a second embodiment of the invention.

### [DETAILED DESCRIPTION]

In the following description the use of "e.g.," "etc.," and "or" indicates non-exclusive alternatives without limitation unless otherwise noted. The use of "including" means "including, but not limited to," unless otherwise noted.

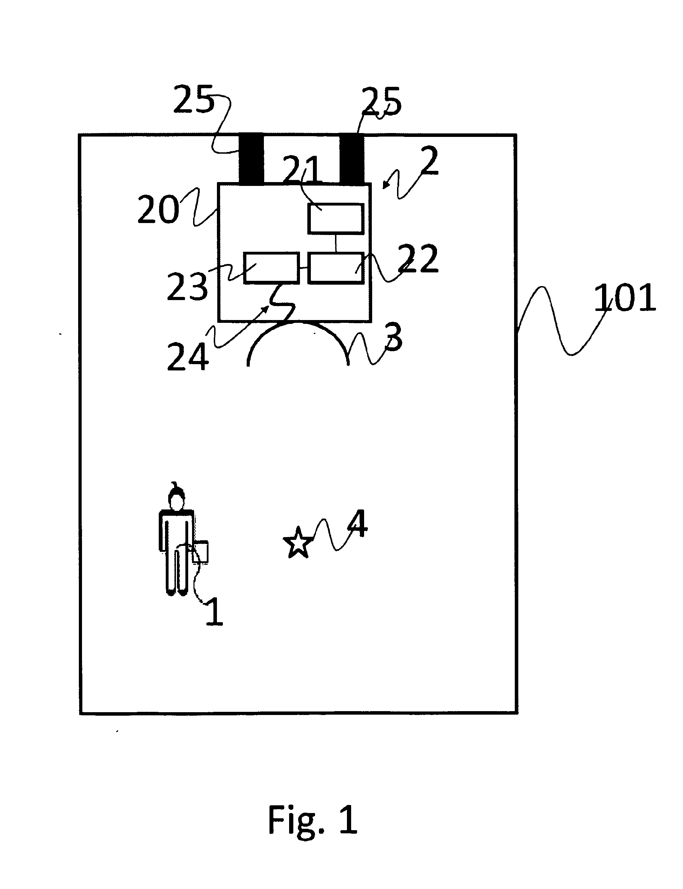

Figure 1 shows a man provided with a GNSS receiver 1, preferably a GPS receiver, for receiving GNSS signals and determining its position. Receiver 1 can be a self-standing apparatus or integrated in any mobile terminal like a mobile phone or a laptop.

The man of figure 1 is placed in an area 101 where line-of-sight barriers prevent receiver 1 from receiving GNSS signals transmitted by orbiting satellites. Area 101 could be for example an underground parking lot or a parking ramp, a road tunnel, a large building such as a shopping mall, a roofed stadium or an airport terminal.

A GNSS emulating system 2 according to the present invention is provided within area 101 and transmits a radio signal (in the following named "GNSS-like signals") which emulates a GNSS signal transmitted by a satellite, as will be better described in the following.

GNSS emulating system 2 and receiver 1 allows determination of a localization information, therefore they implement a ground based localization system, wherein "ground based localization system" is intended to be a localization system wherein signals are transmitted from one or more broadcasting devices in any way fixed to the ground (e.g. a roof, a wall, a pole) for allowing a receiver to determine a position associated to a given area, in particular the coverage area of a broadcasting antenna.

In figure 1 the emulating system 2 is a emulating unit wherein a container 20 contains a power supply unit 21 for supplying the circuitry of the emulating system, a generation unit 22 for calculating and generating signals to be transmitted, an amplifier 23 for amplifying signals generated by the generation unit.

An antenna 3, connected via a cable 24 to the amplifier 23, extends outside the container 20 for broadcasting the amplified signals in a coverage area that in figure 1 is supposed to correspond to area 101.

In the preferred embodiment antenna 3 is connected to the container in order to avoid the use of long cables, nevertheless, is it possible to place antenna 3 in a different position with respect to the container 20; in this case antenna 3 will be connected to the amplifier 23 via a longer cable or any other connection means. Connection means can comprise wired (e.g. coaxial cable or fibre optic) or wireless connections. In one embodiment the emulating unit can transmit intermediate radio signals (no matter at which frequency) carrying the information of GNSS signals. These intermediate radio signals will be than transmodulated and/or converted in frequency for being retransmitted by antenna 3 as GNSS-like signals. In this embodiment, generation unit 22 is separated in two blocks in wireless communication, one generating the intermediate signals and one transmodulating and/or frequency converting the intermediate signals.

As it will be clear from the following description, the presence of cables or devices connected between the generation unit 22 and the antenna 3 has no influence on the determination of the position from receiver because this depends only on a satellite identifier and not on the time delay.

Coming back to figure 1, container 20 is provided with fastening means 25 for connection to a support (e.g. a roof or a pole), and means (not shown) for tilting the antenna 3.

Signal generation unit 22 comprises electronic processing means for generating a GNSS-like signal emulating a GNSS signal.

To the purpose of the present invention, a GNSS signal is any signal which is used for Global Navigation Satellite System, e.g. a GNSS signal can transport a data stream as defined in the "Global Positioning System Standard Positioning Service Signal Specification" (2nd Edition June 2, 1995).

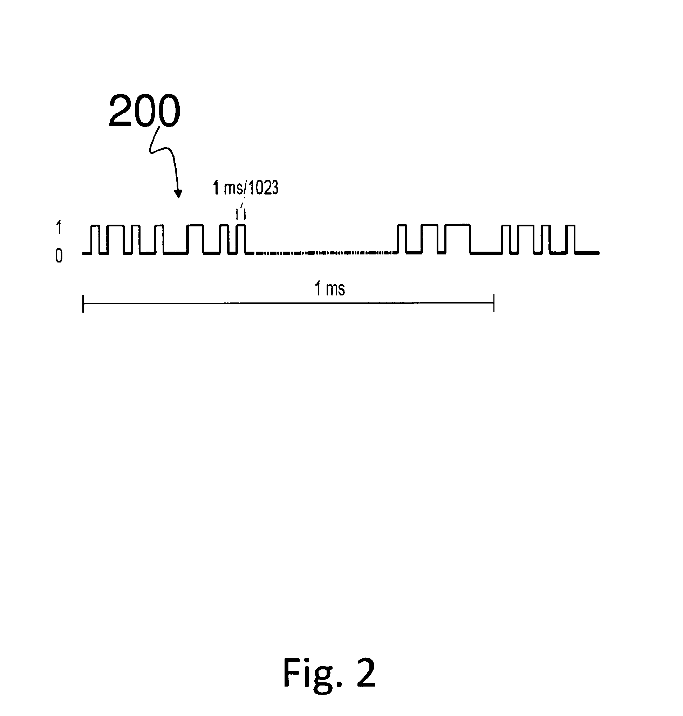

Figure 2 shows a non limiting example of a PRN (Pseudo Random Noise) code 200 of 1023 bits, broadcast with a duration of 1ms and preferably continually repeated. This PRN code is normally used in GNSS signals for the purpose of synchronization and satellite identification: each satellite is in fact identified by a satellite ID number which is mapped on a given PRN code that allows the receiver understanding which satellite is broadcasting a received signal.

To the extent of the present invention, PRN codes and satellite ID numbers associated to the latter are satellite identifiers since they allow identifying the satellite emulated by the emulating system.

According to the invention, the PRN code of figure 2, or a combination of PRN codes, is used for identifying the emulating unit 2 from which the signal originated.

To the purpose of the present invention, identification of an emulating unit shall be understood not only as possibility to identify it in absolute way, but in a broader way as possibility to distinguish an emulating unit with respect to adjacent ones. As it will be clear from the following description, identification is, in fact, necessary to associate an emulating unit to an indoor area.

Signal generation unit 22 is adapted to generate GNSS-like signals provided with PRN codes generated according to the so called Golden Code algorithm which provides highly mutually orthogonal codes, that allow the receiver to distinguish and reconstruct signals with different codes.

In one embodiment, emulating unit 2 broadcasts a single GNSS-like signal identified by a corresponding PRN code X₀.

In an alternative and preferred embodiment that will be considered in the following, signal generation unit 22 generates a plurality of GNSS-like signals with different PRN codes X₀, X₁, X_{2...}X_{N-1}.

GNSS-like signals are transmitted in the same time instant and with the same frequency according to a CDMA (Code Division Multiple Access) protocol. Separation of the signal is, in fact, possible at the receiver side thanks to the PRN codes properties.

Receiver 1 is adapted to provide a localization information in two different modes: an outdoor mode and an indoor mode.

In the outdoor mode receiver 1 works as a standard GNSS receiver (in particular as a GPS receiver) and determines its position in a standard way by calculating its distance from three or four GNSS satellites.

In the indoor mode receiver 1 determines its position by comparing the satellite identifiers of the received GNSS-like signals with a plurality of satellite identifiers, in particular with a list of satellite identifiers, associated to corresponding indoor areas, like a room or a shopping mall.

In the following description, reference will be made to embodiments wherein the receiver uses the PRN codes as satellite identifiers and therefore compares the received PRN codes with stored PRN codes. Nevertheless, it is clear that receiver can associate to each PRN code a satellite (emulated or real) ID number, and therefore compare satellite ID numbers or take actions (like switching localization method) based on the satellite ID numbers.

In one embodiment, receiver 1 comprises a memory area storing a look-up table wherein a given PRN code, or a given set of PRN codes, is associated to a given area, e.g. the group of PRN codes X₀, X₁, X_{2...}X_{N-1} are associated to area 101, while the group of PRN codes X₁, X₂, X_{3...}X_{N} is associated to another area.

Information to be loaded in the look-up table can provided from a source internal or external to the localization system.

In an alternative embodiment, information to be loaded in the above mentioned look-up table is retrieved via the Internet or an external computer or computer network connected (in a wired or wireless way) to receiver 1.

When receiver 1 is in area 101, it switches to the indoor localization method, detects the signals' PRN codes and provides them to the application layer for comparison with the codes stored in the look-up table, and retrieves the information on the area associated to the PRN codes and to emulating unit 2.

In one embodiment, when receiver does not receive enough satellite signals for calculating its position according to the outdoor mode, it switches to the indoor localization method in order to try to determine its position. In this embodiment the emulating system 2 broadcast only one or two GNSS-like signals, so that receiver does not switch back from indoor to outdoor localization method because of several GNSS-like signals received. In order to prevent receiver 1 to switch back from indoor to outdoor localization method in a situation with several emulating systems broadcasting signals, the receiver uses the satellite identifiers (e.g. PRN codes or satellite ID numbers) only of the signals with the same higher power level, therefore automatically selecting only the signals from one single emulating system.

In a different embodiment, switching of the receiver from indoor and outdoor localization method is made automatically by the receiver based on a message data field comprised in the GNSS-like signal, in particular the "Special message" field allocated in "page" 17 of subframe 4 as defined in the "Global Positioning System Standard Positioning Service Signal Specification" (2nd Edition June 2, 1995) .

In another embodiment, switching between indoor and outdoor localization method depends on the PRN (Pseudo Random Noise) codes associated to the received signals.

Emulating unit 2 generates one or more PRN codes different from the ones used by real satellites in outdoor localization systems. If at least one of the PRN codes received by receiver 1 is not a PRN code transmitted by GNSS satellites, than receiver 1 automatically switches to the indoor localization method and compares the group of PRN codes received with the PRN codes stored in the look-up table so as to determine the area associated to the received PRN codes. Vice versa when the received PRN codes correspond to PRN codes associated to real orbiting satellites, receiver switches from indoor to outdoor localization method.

In a further embodiment, receiver 1 is provided with a software algorithm that, based on GNSS signals, keeps track of the movement of the receiver and of the receiver's position on a map. The map comprises indication of areas covered by indoor localization systems. When receiver determines that it is in proximity of and it is heading toward a place covered by indoor localization systems it switches to the indoor localization method.

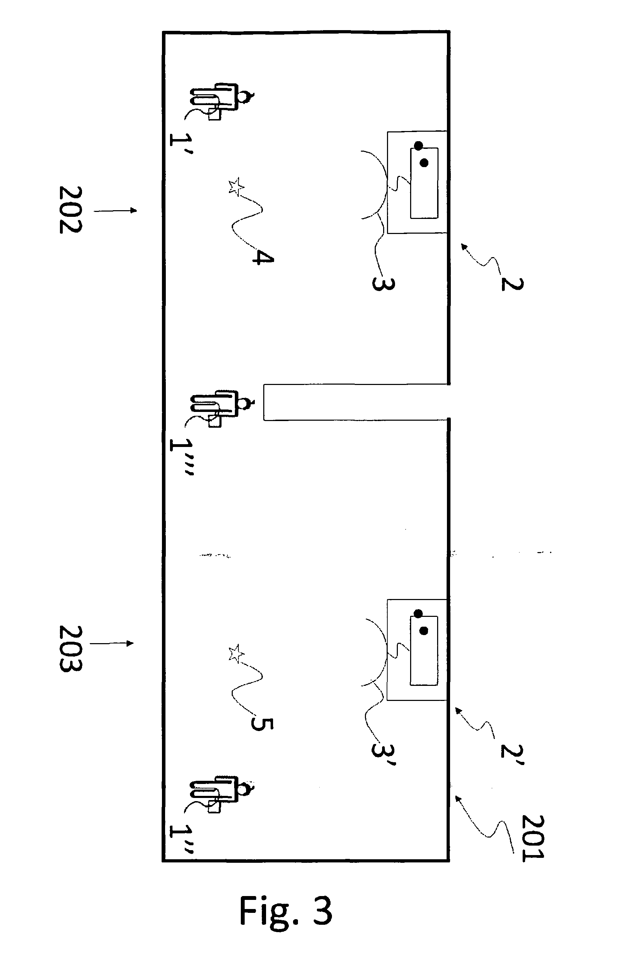

Figure 3 represents a further embodiment of the present invention, wherein two contiguous GNSS emulating systems 2 and 2' are provided within the same area 201 where GNSS signals from satellites are not available.

When the GNSS receiver 1' is in the portion 202 of area 201 covered by emulating system 2, the location correspondent to position 4 is determined based on the signals transmitted by the antenna 3. Differently, when the GNSS receiver 1" is in the portion 203 of area 201 covered by emulating system 2', the location correspondent to position 5 is retrieved. In this embodiment, the information associated to the PRN codes transmitted respectively by emulating systems 2 and 2' are geographic information, in particular longitude and latitude, therefore when the receiver receives a set of PRN codes, it compares them with those in the look-up table and individuates a position that can be represented on a map. Clearly, the solution described with reference to the embodiment of figure 1 is also possible, and the name of a place (e.g. "room" or "house") can be associated to a given set of PRN codes.

Emulating systems 2 and 2' transmits different signals characterized by different set of PRN codes, e.g. emulating system 2 broadcasts PRN codes X₀, X₁, X_{2...}X_{N-1}, while emulating system 2' broadcasts PRN codes Y₀, Y₁, Y_{2...}Y_{N-1}.

In one embodiment, emulating system 2 and 2' are programmed via an interface so as to generate and transmit coded signals using different codes.

A receiver 1"' placed between the two coverage areas 202 and 203 of the two emulating systems 2 and 2' receives 2N signals and selects the N ones more powerful.

Since signals broadcast by the same emulating system have the same power, receiver 1'" will than select a group of signals broadcast from the same emulating system, and will therefore individuate a group of PRN codes identifying a position, or, more in general, an indoor area.

In another embodiment, the receiver selects groups of signals having the same power level, and for each group extracts a corresponding group of identifiers. In the example of figure 3 a receiver 1'" will therefore extract groups of identifiers (PRN codes or satellite ID number) that can be compared with stored groups of identifier for individuating different areas associated to the stored groups of identifiers. In this embodiment, receiver knows the area associated to each group of received signals and measures the power of the received signals. In the hypothesis that all the emulating systems broadcasts signals with the same power, the power of the receive signals is correlated to the distance from the broadcasting antenna. Therefore the receiver knows to be closer to the area associated to most powerful received signals, and also knows the spatial relations with the other areas associated to the other received signals. As an example the ratio between the power measured of two signals indicates a ratio of the distance from two emulating systems broadcasting the two signals.

The receiver can therefore interpolate this information for generating location information that is more precise with respect to the information on a single area. This location information can be further improved by using data maps stored in the receiver. As an example, if area 201 is a building of an airport and area 202 and 203 are two different terminals connected by a tunnel, when receiver receives both signals it understands that it is in the tunnel connecting the two terminals 202 and 203.

Additionally, by dynamically measuring the change of the received signals power, the receiver generate (and provide the user via a user interface like a display) motion information, e.g. the receiver is moving from terminal 202 to terminal 203 or vice versa.

In one embodiment the receiver knows which is the maximum power broadcast by each emulating system, therefore measuring the power of the signals received by different emulating systems it generates more detailed location information; making reference to the above cited example of the airport, the receiver can understand that it is in a quite precise area of the tunnel, e.g. closer to terminal 202 or to terminal 203.

In one embodiment receiver 1 is programmed to select always the same number of PRN codes, therefore all the emulating systems of the localization system shall broadcast the same number of PRN codes.

In a different embodiment, providing more installation flexibility, receiver 1 can be set to select a different number of PRN codes.

Setting of the receiver can be made manually by the user, or can be made automatically.

Preferably receiver 1 selects all the GNSS-like signals, extracts the PRN codes of all the selected signals and compares the group of extracted PRN codes with codes stored in the look-up table.

In a different embodiment, the GNSS-like signal transports information relative to the number of GNSS-like signals that are broadcast by the same emulating system, so that receiver 1 knows how many PRN codes it is expected to select in a situation wherein more PRN codes are received.

In another embodiment, the number of PRN codes to be selected is associated to the indoor area. In this embodiment, when receiver knows it is next to a given area (as explained above because it tracks its position with outdoor GNSS signals by means of a software algorithm), it selects a number of PRN codes stored in an area of the receiver and associated to areas in the neighbourhood of the tracked position. This given number of PRN codes can be expressly indicated in a field of the look-up table, or can be extracted from the look-up table by analyzing the number of PRN codes indicated in the look-up table.

From the above description, the advantages of the present invention are clear.

As it is apparent to those skilled in the art, many modifications are possible to the localization system described above, without departing from the scope of the present invention as it results from the annexed claims.

In particular, the person skilled in the art can modify the indoor localization methods and systems above described by taking features of different embodiments.

In particular the emulating system 2 can be made of one or more devices in various way connected, integrated or in communication .

Additionally, it is clear that, since localization of the receiver is obtained by comparing one or more PRN codes with corresponding information stored in a memory area of the receiver, the GNSS-like signal does not need to transport all the usual data of a GNSS signal. Nevertheless, in a preferred embodiment the GNSS-like signal broadcast by the emulating system of the invention do transport actual almanac and ephemeris information. This information is collected by the emulating system via the internet or through a GPS receiver whose antenna is located outdoor. GNSS-like signal transporting this actual information improves the outdoor fix time when the receivers leaves the indoor environment.

It is also clear that the look-up table and its related information can be temporary stored in the receiver, e.g. it can be requested by the receiver to an external source each time the receiver makes use of the indoor localization method.

In particular, it is to be understood that the look-up table can be reduced to a table of one line, wherein to a given set or PRN codes it is associated an information relating to an indoor area or to a position. It is therefore to be understood that the term look-up table shall be understood as information stored in certain memory area and somehow linked.

In one embodiment, receiver can query a remote database for receiving the geographic information associated to a given set of identifiers, like PRN codes.

## Claims

1. Indoor localization method, comprising the steps of:
broadcasting from a first fixed emulating system (2) at least one GNSS-like signal emulating a GNSS signal transmitted by a satellite, said GNSS-like signal carrying an identifier of said satellite,
the method being **characterized by**
receiving said GNSS-like signal at a receiver,
comparing said identifier with a plurality of identifiers associated to different areas (101),
determining a position of the receiver based on said comparison.

2. Method according to claim 1, wherein said fixed emulating system (2) broadcasts a plurality of GNSS-like signals each having an identifier, and wherein said position is determined by comparing the received identifiers with groups of identifiers, said groups of identifiers being associated to different areas and being preferably stored in the receiver.

3. Method according to claim 1 or 2, wherein at least a second fixed emulating system (2') broadcasts at least one GNSS-like signal emulating a GNSS signal transmitted by a satellite, said GNSS-like signal carrying an identifier of said satellite, the method further comprising the steps of
- receiving the GNSS-like signals broadcast by said first and second emulating systems (2, 2'),
- measuring the power level of each received GNSS-like signal,
- selecting one or more received signals having the same higher power level,
- detecting the identifiers of the selected signals,
- determining said position by comparing the detected identifiers with groups of identifiers constituted of the same number of extracted identifiers, said groups of identifiers being associated to different areas.

4. Method according to claim 1 or 2, wherein at least a second fixed emulating system (2') broadcasts at least one GNSS-like signal emulating a GNSS signal transmitted by a satellite, said GNSS-like signal carrying an identifier of said satellite, the method comprising the steps of:
- receiving the GNSS-like signals broadcast by said first and second emulating systems (2, 2'),
- measuring the power level of each received GNSS-like signal,
- grouping received signals having the same power level,
- for each group of signals detecting the relative identifiers,
- determining said position by comparing the detected identifiers with groups of identifiers constituted of the same number of detected identifiers, said groups of identifiers being associated to different areas.

5. Method according to claim 4, wherein said receiver knows a broadcasting power of said GNSS-like signals, wherein said receiver calculates a distance from emulating systems broadcasting said GNSS-like signals based on said broadcasting power and wherein said position depends on the distance from said emulating systems.

6. Method according to any of claims 3 to 5, wherein said position depends on data maps preferably stored in the receiver.

7. Method according to any of the preceding claims, wherein said identifier is a PRN code or a satellite identifier number, and wherein said PRN code or said satellite identifier number is different from PRN codes or satellite identifier numbers associated to GNSS signals broadcast by satellites of an outdoor localization system.

8. Method according to any of the preceding claims further comprising the step of broadcasting a message indicating the receiver that the indoor localization method shall be used.

9. Method according to any of the preceding claims, wherein a list of identifiers and information for associating said list of identifiers to different indoor areas is broadcast to the receiver, preferably via a message transmitted along with the GNSS-like signal, in particular the GPS Navigation Message.

10. Receiver for providing indoor localization information, comprising
means for receiving GNSS signals and GNSS-like signals emulating GNSS signals,
means for comparing said identifier with a plurality of identifiers associated to different areas (101),
means for determining a position of the receiver based on said comparison.

11. Receiver according to claim 10, further comprising means for measuring the power of a received GNSS-like signal and wherein said means for determining a position of the receiver are adapted to determine the position of the receiver based on the measured power.

12. Receiver according to claim 10 or 11, further comprising means for generating a localization information according to an outdoor localization method, said outdoor localization method comprising the steps of receiving at least three GNSS signals broadcast by real satellites, measuring a distance from the real satellites, calculating a receiver position, wherein said receiver is adapted to switch between said indoor and outdoor localization method depending on the PRN code or satellite ID number associated to the received signals.

13. Receiver according to claim 10 or 11, further comprising means for generating a localization information according to an outdoor localization method, said outdoor localization method comprising the steps of receiving at least three GNSS signals broadcast by real satellites, measuring a distance from the real satellites, calculating a receiver position, wherein said receiver is adapted to switch between said indoor and outdoor localization method depending on the number of received GNSS signals.

14. Receiver according to claim 10 or 11, further comprising means for generating a localization information according to all outdoor localization method, said outdoor localization method comprising the steps of receiving at least three GNSS signals broadcast by real satellites, measuring a distance from the real satellites, calculating a receiver position, wherein said receiver is adapted to switch between said indoor and outdoor localization method depending on information transmitted along with the received signals, in particular based on the "Special message" field allocated in "page" 17 of subframe 4 of a GNSS-like signal.

15. Receiver according to claim 10 or 11, further comprising means for generating a localization information according to an outdoor localization method, said outdoor localization method comprising the steps of receiving at least three GNSS signals broadcast by real satellites, measuring a distance from the real satellites, calculating a receiver position, wherein said receiver (1) is adapted to keep track of its position and movement on a map comprising indication of indoor areas covered by indoor localization systems, and wherein said receiver is adapted to switch from the outdoor and the indoor localization method when it determines that it is in proximity of and it is heading toward an area covered by indoor localization systems.
